# EUROPÄISCHE PATENTSCHRIFT

(11) **EP 2 053 534 B1**
(45) Veröffentlichungstag und Bekanntmachung des Hinweises auf die Patenterteilung: **25.08.2010**
(21) Anmeldenummer: 08167495.4
(22) Anmeldetag: 24.10.2008
(51) Int. Cl.: G06K 9/00, B60Q 1/14

(54) **Vorrichtung für Kraftfahrzeuge zur Klassifizierung von Lichtquellen im Verkehrsraum**
Device for motor vehicles for classifying light sources in the traffic area
Dispositif pour véhicules automobiles destiné à la classification de sources de lumière dans l'espace de circulation

(30) Priorität: 26.10.2007 DE 102007051269
(43) Veröffentlichungstag der Anmeldung: 29.04.2009
(73) Patentinhaber: Hella KGaA Hueck & Co., 59552 Lippstadt (DE)
(72) Erfinder: Rodenkirchen, Florian, 33611 Bielefeld (DE); Schwarz, Sergej, 70825 Korntal-Münchingen (DE)

(56) Entgegenhaltungen:
- EP-A- 1 129 902
- DE-A1- 3 737 395
- DE-U1- 9 305 692
- DE-U1- 29 825 026
- US-A- 5 036 437
- US-A1- 2006 018 511

## Beschreibung

Die Erfindung betrifft eine Vorrichtung für Kraftfahrzeuge zur Klassifizierung von Lichtquellen im Verkehrsraum.

Aus der Druckschrift mit der Veröffentlichungsnummer DE 698 02 511 T2 ist eine Vorrichtung für Kraftfahrzeuge zur Klassifizierung von Lichtquellen im vor dem Kraftfahrzeug liegenden Verkehrsraum bekannt. Die Vorrichtung weist ein optisches System mit Linsen auf, welches die Lichtstrahlen, die aus dem vor dem Kraftfahrzeug liegenden Verkehrsraum erfasst und einem Bilderfassungs- und Verarbeitungssystem zuführt. Das Bildverarbeitungssystem weist einen Bildmatrixsensor auf, mit dem ein elektronisches Bild des vor dem Kraftfahrzeug liegenden Verkehrsraums erzeugt werden kann. Aus diesem elektronischen Bild kann das Bildverarbeitungssystem durch verschiedene Algorithmen Lichtquellen bestimmen. Das System ist ferner so ausgebildet, dass das Licht, welches von den ermittelten Lichtquellen ausgestrahlt wird, auf die Betriebsfrequenz untersucht wird. Aufgrund der Frequenz des Lichts kann eine Aussage über die Art der Lichtquelle gemacht werden. So kann beispielsweise, sofern das Licht eine Trägerfrequenz von 50 bis 60 Hz hat, die Aussage getroffen werden, dass es sich bei der Lichtquelle um eine Straßenlateme oder eine Leuchtreklame handelt, da diese mit einem Strom betrieben werden, die eine Frequenz von 50 bis 60 Hz hat. Das Licht, das von mit 50 Hz bis 60 Hz betriebenen Lichtquellen ausgestrahlt wird, hat daher eine Trägerwelle mit einer Frequenz von 50 Hz bis 60 Hz. Das Licht, welches von entgegenkommenden oder vorausfahrenden Fahrzeugen abgestrahlt wird, hat dagegen in der Regel eine andere Frequenz, da die Betriebsspannung der Lichtquellen in Fahrzeugen in der Regel andere Frequenzen haben.

Das in der Druckschrift beschriebene System ist insgesamt sehr aufwändig, insbesondere das Bildverarbeitungssystem.

In der Druckschrift DE 93 05 692 U1 ist ein automatischer Schalter zum Einschalten einer Beleuchtungsanlage offenbart. Er betrifft allerdings nur das Einschalten der Beleuchtungsanlage insgesamt, nicht aber die Steuerung einzelner Funktionen der Beleuchtungsanlage. Der automatische Schalter ist ergänzt um Bauelemente, die verhindern, dass bei ausreichender künstlicher Beleuchtung, zum Beispiel in Städten, die Beleuchtungsanlage insgesamt abgeschaltet wird. Eine Klassifizierung einer Vielzahl von Lichtquellen mit unterschiedlichen Eigenschaften ist im Verkehrsraum nicht möglich.

Aus der Druckschrift EP 1 129 902 ist ein System bekannt, das versucht, Licht anhand der Frequenz seiner Intensitätsmodulation der Straßenbeleuchtung zuzuordnen, und, falls das scheitert, auf ein entgegenkommendes Kraftfahrzeug schließt und das Fernlicht ausschaltet.

Aus der Druckschrift US 2006/0018511 A1 ist dagegen eine Vorrichtung zum Steuern des Fernlichts bekannt. Dieses ist aber sehr komplex und nur mit erheblichem Entwicklungs-, Programmier- und Entwurfsaufwand herstellbar. Eine Klassifizierung einer Vielzahl von Lichtquellen mit unterschiedlichen Eigenschaften ist auch mit der Druckschrift US 2006/0018511 A1 nicht möglich.

Es liegt der Erfindung die Aufgabe zugrunde, eine einfache Vorrichtung für Kraftfahrzeuge vorzuschlagen, die zur Klassifizierung von Lichtquellen im Verkehrsraum geeignet und eingerichtet ist.

Diese Aufgabe wird erfindungsgemäß dadurch gelöst, dass die Vorrichtung einen oder mehrere Sensoren mit Fotoelementen, Fotodioden oder Fototransistoren aufweist, die in Abhängigkeit von dem einfallenden Licht ein elektrisches, die Helligkeit des einfallenden Lichts angebendes Signal erzeugen. Anstelle eines Bildmatrixsensors mit einer Vielzahl von lichtempfindlichen Elementen und Oberflächen wird somit vorteilhaft nur ein einziges lichtempfindliches Element pro Sensor verwendet. Die Vorrichtung weist ferner ein oder mehrere Filter auf, wobei die Filter zumindest ein Passband haben, das zum Durchlassen eines Teils des Signals abgestimmt ist. Damit kann der Teil des Signals aus dem gesamten Sensorsignal herausgefiltert werden, der ein Auftreten des Lichts angibt, das von einer bestimmten Klasse von Lichtquellen ausgestrahlt wird. Filter mit verschiedenen Passbändem werden nachfolgend als Filter unterschiedlichen Typs bezeichnet.

Gemäß der Erfindung hat jeder Filtertyp wenigstens ein Passband oder mehrere Passbänder. Das wenigstens eine Passband kann sich von 0 bis 10 Hz, 70 bis 310 Hz oder 190 bis 610 Hz erstrecken.

Ein weiteres Passband kann auf einen Frequenzbereich von 45 bis 65 Hz, insbesondere von 50 oder 60 Hz abgestimmt sein.

Es ist beispielsweise denkbar, dass ein Filtertyp ein Passband aufweist, das auf das Hindurchlassen von Signalen abgestimmt ist, welches durch Licht von Straßenlaternen oder Leuchtreklamen erzeugt wird. Ein anderer Filtertyp kann Passbänder haben, deren Frequenzen auf Signale abgestimmt sind, welche von Licht von an einem Kraftfahrzeug auftretenden Lichtquelle erzeugt werden.

Gemäß der Erfindung kann jedem Sensor ein Filter zumindest eines Typs zugeordnet sein. Denkbar ist allerdings auch, dass einer Gruppe von Sensoren ein Filter zumindest eines Typs zugeordnet ist, oder dass allen Sensoren ein Filter zumindest eines Typs zugeordnet ist.

Gemäß der Erfindung können die Filter Teile der Sensoren sein.

Ein Passband kann auf Signale abgestimmt sein, die von Lichtquellen erzeugt werden, die mit Gleichstrom betrieben werden. Es kann sich dabei um Halogenlampen oder Glühlampen handeln.

Das andere Passband ist vorzugsweise abgestimmt, um Signale hindurchzulassen, die durch mit 50 bis 60 Hz Betriebsspannung betriebene Straßenlaternen oder Leuchtreklamen erzeugt werden.

Das wieder andere Passband kann so gewählt sein, dass Signale hindurchgelassen werden, die durch das von Leuchtdioden abgestrahlte Licht erzeugt werden. Leuchtdioden haben in der Regel eine Betriebsfrequenz von 80 bis 300 Hz.

Xenonlampen haben dagegen eine Betriebsspannung mit einer Betriebsfrequenz von 200 bis 600 Hz. Auf diese Leuchten kann ein weiteres Passband abgestimmt sein.

Gemäß der Erfindung kann das oder die Filter einen oder mehrere Ausgänge aufweisen, an welchen der Teil des Signals abgreifbar ist, dass die Helligkeit des Lichts einer Klasse von Lichtquellen angibt. Es kann somit am Ausgang der Filter erkannt werden, ob eine Lichtquelle mit der zugeordneten Betriebsfrequenz Licht auf die Sensoren gestrahlt hat oder nicht.

Gemäß der Erfindung kann die Vorrichtung ein Steuer- und/oder Regelmittel aufweisen, wobei das Steuer- und/oder Regelmittel zum Auswerten des an dem Ausgang oder den Ausgängen des Filters oder der Filter anliegenden Teile des Signals geeignet und eingerichtet ist. Das Steuer- und/oder Regelmittel kann zum Erzeugen von Stellsignalen zum Ein- oder Ausschalten des Femlichtes des Kraftfahrzeugs in Abhängigkeit des Ergebnisses der Auswertung geeignet und eingerichtet sein. Wird beispielsweise Licht von einem vorausfahrenden oder entgegenkommenden Fahrzeug erkannt, wird das Fernlicht abgeschaltet. Auch wenn das Licht von Straßenlaternen erkannt wird, kann das Fernlicht abgeschaltet werden, je nach dem, ob es sich um eine einzelne Laterne oder um einen Zug von Laternen handelt.

Anhand der beigefügten Zeichnung wird die Erfindung nachfolgend näher erläutert. Dabei zeigt:

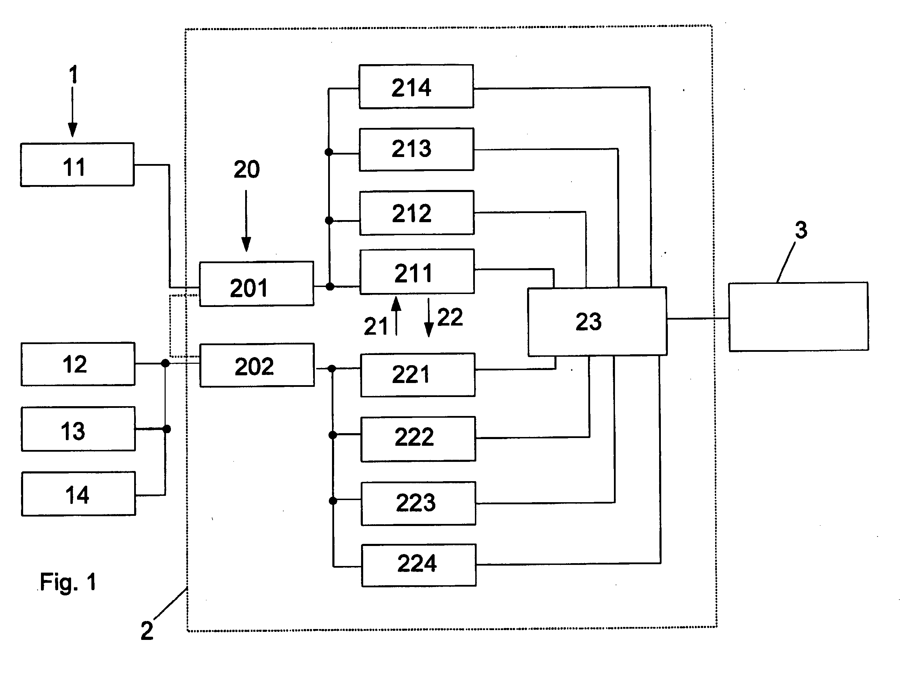

Fig. 1 ein Blockschaltbild einer erfindungsgemäßen Vorrichtung.

Die in der Fig. 1 dargestellte erfindungsgemäße Vorrichtung 2 für Kraftfahrzeuge zur Klassifizierung von Lichtquellen 1 im Verkehrsraum weist zwei Sensoren 20 auf, die durch Fototransistoren gebildet werden. Der eine Sensor 201 ist so ausgerichtet, dass mit ihm das Licht von einer Lichtquelle 11 erfasst werden kann, die oberhalb der auf der Straße fahrenden Kraftfahrzeuge angeordnet ist. Bei einer solchen Lichtquelle 11 kann es sich insbesondere um eine Straßenlateme handeln, die am Rand der Straße oder über der Fahrbahn angeordnet ist. Mit dem ersten Sensor 201 kann allerdings auch Licht von anderen Lichtquellen 12, 13, 14 erfasst werden. Dieses Licht wird allerdings im Regelfall nicht unmittelbar erfasst, sondern als Streulicht oder reflektiertes Licht.

Bei den weiteren Lichtquellen 12, 13, 14 kann es sich um die Scheinwerfer von entgegenkommenden Fahrzeugen, um Rückleuchten von entgegenkommenden Fahrzeugen oder dergleichen handeln.

Die Lichtquellen 1 unterscheiden sich in der Art und Weise wie das Licht erzeugt wird. Bei der Lichtquelle 11, es handelt sich hierbei um eine Straßenlateme oder dergleichen, wird das Licht mit einem Leuchtmittel erzeugt, an dem die in den Niederspannungsnetzen übliche Spannung mit einer Frequenz von 50 bis 60 Hz anliegt. Das Licht hat daher eine Trägerschwingung von 50 bis 60 Hz.

Eine Rückleuchte eines vorausfahrenden Fahrzeugs oder ein Scheinwerfer eines entgegenkommenden Fahrzeugs kann als Lichtquellen eine Vielzahl von Leuchtdioden aufweisen. Diese Leuchtdioden werden in der Regel mit einer Spannung versorgt, die eine Frequenz von 80 bis 300 Hz hat. Die Trägerfrequenz ist dann 80 bis 300 Hz.

Andere Scheinwerfer weisen dagegen Xenon Leuchtmittel auf, die mit einer Spannung betrieben werden, die eine Frequenz von 200 bis 600 Hz hat. Die Trägerfrequenz der Trägerschwingung ist dann 200 bis 600 Hz. Rückleuchten und Scheinwerfer mit Halogenlampen oder Glühlampen werden dagegen in der Regel mit Gleichstrom betrieben.

Die unterschiedlichen Lichtquellen 1, deren Licht im Verkehrsraum auftreten kann, können anhand ihrer Spannungsfrequenz in unterschiedliche Klassen eingeteilt werden. Anhand dieser Klassifizierung ist feststellbar, welche Lichtquellen mit einer Netzspannung mit einer Frequenz von 50 bis 60 Hz versorgt werden. Diese Lichtquellen können allein aufgrund der Spannungsfrequenz und der daraus resultierenden Trägerfrequenz von den anderen Lichtquellen unterschieden werden. Es lässt sich daher anhand der Trägerfrequenz des Lichtes feststellen, ob das Licht von einer Straßenlateme oder wohlmöglich einer Leuchtreklame oder von einem vorausfahrenden oder entgegenkommenden Kraftfahrzeug erzeugt wird.

Den beiden als Sensoren 201, 202 vorgesehenen Fototransistoren sind jeweils vier Filter 21, 22 nachgeschaltet. Der Ausgang jeder der Sensoren 20 ist also mit jeweils vier Filtern 21, 22 verbunden. Die beiden Gruppen 21, 22 von Filtern weisen vier Filter unterschiedlichen Typs auf, die jeweils ein Passband haben, welches auf die Frequenzen des Lichtes der verschiedenen Lichtquellen 1 angepasst ist.

Ein erstes Filter 211, 221 lässt beispielsweise jeweils ein Signal der Sensoren 20 durch, welches in einem Frequenzbereich zwischen 0 und 10 Hz liegt. Diese Filter sind geeignet, ein Signal der Sensoren 20 durchzulassen, welches aufgrund eines Lichteinfalls einer mit Gleichspannung betriebenen Lichtquelle erzeugt worden ist. Zweite Filter 212, 222 lassen dagegen Signale durch, die aufgrund eines Lichteinfalls einer Lichtquelle mit einer Betriebsspannung von 50 bis 60 Hz durch die Sensoren 20 erzeugt worden ist. Diese Filter lassen somit Teile der von den Sensoren 20 erzeugten Signale durch, die auf die Straßenlaternen zurückgehen.

Dritte Filter 213, 223 haben ein Passband, welches Teile der elektrischen Signale der Sensoren 20 durchlässt, die Frequenzen zwischen 80 und 300 Hz haben. Vierte Filter lassen dagegen Teile der Sensorsignale durch, die in einem Frequenzbereich zwischen 200 und 600 Hz liegen.

Die Ausgänge der Filter 21, 22 sind mit einem Steuer- und/oder Regelmittel 23 verbunden. In diesem Steuer- und/oder Regelmittel, es kann sich hierbei um eine Mikroprozessorsteuerung (Microcontroller) handeln, werden die Ausgangssignale der Filter 21, 22 ausgewertet und je nach dem, welche Klasse von Lichtquellen 1 erkannt wird, kann dann ein Stellsignal erzeugt werden, aufgrund dessen durch ein Steuergerät 3 das Fernlicht der Scheinwerfer ein- oder ausgeschaltet wird.

### Bezugszeichenliste

- 1: Lichtquellen
- 2: Vorrichtung
- 3: Steuergerät
- 11, 12, 13, 14: Lichtquellen
- 20: Sensoren
- 21, 22: Filter
- 23: Steuer- und/oder Regelmittel
- 201: Erster Sensor
- 202: Zweiter Sensor
- 211, 221: erste Filter
- 212,222: zweite Filter
- 213, 223: dritte Filter
- 214, 224: vierte Filter

## Patentansprüche

1. Vorrichtung (2) für Kraftfahrzeuge zur Klassifizierung von Rückleuchten oder Scheinwerfen von Kraftfahrzeugen (1) im Verkehrsraum mit folgenden Merkmalen:
- die Vorrichtung (2) weist ein oder mehrere Sensoren (20) mit Fotoelementen, Fotodioden oder Fototransistoren auf, die in Abhängigkeit von einfallendem Licht ein elektrisches, die Helligkeit des einfallenden Lichts angebendes Signal erzeugen,
**dadurch gekennzeichnet, dass**
- die Vorrichtung (2) ein oder mehrere Filter (21, 22) aufweist, wobei die Filter (21, 22) zumindest ein Passband haben, das zum Durchlassen eines Teils des Signals abgestimmt ist, und ein Auftreten dieses Teils des Signals am Ausgang des Filters die Gegenwart mindestens einer Lichtquelle (1) angibt, die einer Klasse von elektrischen Lichtquellen (1) zugeordnet ist, die mit einem elektrischen Strom betrieben werden, der eine Frequenz hat, die innerhalb des Passbands liegt
- jedes Filter (21, 22) zumindest ein Passband hat und
- sich das Passband oder zumindest eines der Passbänder von 0 bis 10Hz, 70 bis 310 Hz oder von 190 bis 610 Hz erstreckt.

2. Vorrichtung (2) nach Anspruch 1, **dadurch gekennzeichnet, dass** jedem Sensor (20) ein Filter (21, 22) zugeordnet ist.

3. Vorrichtung (2) nach Anspruch 1, **dadurch gekennzeichnet, dass** einer Gruppe von Sensoren (20) ein Filter (21, 22) zugeordnet ist.

4. Vorrichtung (2) nach Anspruch 1, **dadurch gekennzeichnet, dass** allen Sensoren (20) ein Filter (21, 22) zugeordnet ist.

5. Vorrichtung (2) nach einem der Ansprüche 1 bis 4, **dadurch gekennzeichnet, dass** die Filter (21, 22) Teile der Sensoren sind.

6. Vorrichtung (2) nach einem der Ansprüche 1 bis 5, **dadurch gekennzeichnet, dass** eines der Passbänder sich von 45 bis 65 Hz erstreckt.

7. Vorrichtung (2) nach einem der Ansprüche 1 bis 6, **dadurch gekennzeichnet, dass** die Vorrichtung ein Steuer- und/oder Regelmittel (23) aufweist, wobei das Steuer- und/oder Regelmittel (23) zum Auswerten des an dem Ausgang oder den Ausgängen des Filters (21, 22) oder der Filter (21, 22) anliegenden Teils des Signals geeignet und eingerichtet ist.

8. Vorrichtung (2) nach Anspruch 7, **dadurch gekennzeichnet, dass** das Steuer- und/oder Regelmittel (23) zum Erzeugen von Stellsignalen zum Ein- oder Ausschalten des Fernlichts des Kraftfahrzeugs in Abhängigkeit des Ergebnisses der Auswertung geeignet und eingerichtet ist.

## Claims

1. Devices (2) for motor vehicles for the classification of rear lamps of headlamps of motor vehicles in traffic with the following characteristics:
- The device (2) has one or more sensors (20) with photo sensors, photo diodes or photo transistors generating an electric signal indicating the brightness of the incident light depending on the incident light,
**characterized in that**
- The device (2)has one or more filters (21, 22), wherein the filters (21, 22) have at least one passband adjusted to let pass part of the signal, and wherein the appearance of this part of the signal at the output of the filter indicates at least one light source (1), which is allocated to a class of electric light sources (1) being operated with an electric current having a frequency which is inside the passband,
- Each filter (21, 22) having at least one passband and
- The pass band or at least one of the passbands ranges from 0 to 10Hz, 70 to 310 Hz or from 190 to 610Hz.

2. Device (2) according to claim 1, **characterized in that** each sensor is allocated a filter (21, 22).

3. Device (2) according to claim 1, **characterized in that** a group of sensors (20) is allocated a filter (21, 22).

4. Device (2) according to claim 1, **characterized in that** all sensors (20) are allocated a filter (21, 22).

5. Device (2) according to claims 1 to 4, **characterized in that** the filters (21, 22) are part of the sensors.

6. Device (2) according to claims 1 to 5, **characterized in that** one of the passbands ranges from 45 to 65Hz.

7. Device (2) according to one of the claims 1 to 6, **characterized in that** the device has a means of control and/ or regulation (23), wherein the means of control or regulation (23) is suitable for and adapted to the evaluation of the part of the signal applied to the output or the outputs of the filter (21, 22) or filters (21, 22).

8. Device according to claim 7, **characterized in that** the means of control and/ or regulation (23) is suitable for and adapted to the generation of control signals for the switching on and off of the high beam of the motor vehicle following the results of the evaluation.

## Revendications

1. Dispositif (2) pour véhicules automobiles pour classifier les feux arrière ou les projecteurs des véhicules automobiles du trafic routier avec les caractéristiques suivantes;
- le dispositif (2) présente un ou plusieurs capteurs (20) aux photo-couples, photodiodes ou phototransistors qui en fonction de la lumière entrante engendrent un signal électrique indiquant la
luminosité de la lumière entrante,
**caractérisé en ce que**
- le dispositif (2) présente un ou plusieurs filtres (21, 22), les filtres (21, 22) ayant au moins une bande passante accordée pour permettre le passage d'une partie du signal et l'apparition de cette partie du signal à la sortie du filtre indique la présence d'au moins une source de lumière (1) qui est attribuée à une classe de sources électriques (1) fonctionnant au courant électrique qui possède une fréquence se trouvent dans la bande passante,
- chaque filtre (21, 22) a au moins une bande passante et
- cette bande passante ou au moins une des bandes passantes s'étend de 0 à 10 Hz, de 70 à 310 Hz ou de 190 à 610 Hz.

2. Dispositif (2) selon la revendication 1, **caractérisé en ce qu'**un filtre (21, 22) est attribué à chaque capteur (20).

3. Dispositif (2) selon la revendication 1, **caractérisé en ce qu'**un filtre (21, 22) est attribué à une groupe de capteurs (20).

4. Dispositif (2) selon la revendication 1, **caractérisé en ce qu'**un filtre (21, 22) est attribué à tous les capteurs (20).

5. Dispositif (2) selon une des revendications 1 à 4, **caractérisé en ce que** les filtres (21, 22) font partie des capteurs.

6. Dispositif (2) selon une des revendications 1 à 5, **caractérisé en ce qu'**une des bandes passantes s'étend de 45 à 65 Hz.

7. Dispositif (2) selon une des revendications 1 à 6, **caractérisé en ce que** le dispositif présente un moyen de contrôle et/ou de réglage (23), le moyen de contrôle et/ou de réglage (23) étant approprié et préréglé pour exploiter la partie du signal se trouvant à la sortie ou les sorties du filtre (21, 22) ou des filtres (21, 22).

8. Dispositif (2) selon la revendication 7, **caractérisé en ce que** le moyen de contrôle et/ou de réglage (23) est approprié et préréglé pour produire des signaux de réglage pour allumer ou éteindre le feu de route d'un véhicule automobile en fonction du résultat de l'exploitation.
